# FASCICULE DE BREVET EUROPEEN

(11) **EP 3 999 413 B1**
(45) Date de publication et mention de la délivrance du brevet: **19.03.2025**
(21) Numéro de dépôt: 20753994.1
(22) Date de dépôt: 17.07.2020
(51) Int. Cl.: B64F 5/10

(54) **PROCÉDÉ ET SYSTÈME DE FABRICATION D'UN AÉROSTAT À STRUCTURE RIGIDE, ET AÉROSTAT PORTEUR DE CHARGE LOURDE AINSI FABRIQUÉ**
VERFAHREN UND SYSTEM ZUR HERSTELLUNG EINES AEROSTATEN MIT EINER STARKEN STRUKTUR UND DURCH DIESES VERFAHREN HERGESTELLTER SCHWERLAST-AEROSTAT
METHOD AND SYSTEM FOR MANUFACTURING AN AEROSTAT WITH A RIGID STRUCTURE, AND HEAVY LOAD-CARRYING AEROSTAT MANUFACTURED THEREBY

(30) Priorité: 19.07.2019 FR 1908229
(43) Date de publication de la demande: 25.05.2022
(60) Demande divisionnaire: 25156359.9
(73) Titulaire: Flying Whales, 92150 Suresnes (FR)
(72) Inventeur: BARTHE, Clément, 92150 SURESNES (FR); CRESPIN, Emmanuel, 92150 SURESNES (FR); GOURLIN, Jean-Marie, 92150 SURESNES (FR)
(74) Mandataire: IP Trust
(86) Numéro de dépôt international: PCT/FR2020/051296
(87) Numéro de publication internationale: WO 2021/014082

(56) Documents cités:
- US-A- 1 559 807
- US-A- 3 129 911
- GOODYEAR: "Goodyear's Blimp Time-Lapse Build in Blimp Hanger", YOUTUBE, 14 March 2014 (2014-03-14), pages 1 pp., XP054980281, Retrieved from the Internet <URL:https://www.youtube.com/watch?v=vve8hh9_xGI> [retrieved on 20200305]

## Description

### Domaine technique

La présente invention concerne un procédé pour ériger la structure d'un aérostat à structure rigide. Elle vise aussi un système pour ériger la structure d'un aérostat.

Le domaine de l'invention est plus particulièrement, mais de manière non limitative, celui des ballons dirigeables à structure rigide, notamment celui des dirigeables porteurs de charge lourde.

### État de la technique antérieure

La présente invention concerne un procédé de fabrication de dirigeables.

On connaît le document US 1 559 807 qui propose une méthode de fabrication de dirigeables, en particulier de dirigeables tout en métal, dans laquelle le travail est facilité par rapport aux méthodes selon l'art antérieur, et est d'une grande précision du fait de la fabrication du dirigeable en ajoutant des portions progressivement à la partie achevée pour compléter la totalité de la structure en place, en évitant ainsi le montage de sous-ensembles préformés.

Par ailleurs, selon la méthode exposée selon cet art antérieur, le rivetage des longerons et la fixation de la peau du dirigeable sont facilités par le travail au sol des ouvriers.

La méthode propose de construire le dirigeable par tronçons horizontaux successifs, en partant du tronçon horizontal supérieur. La totalité de la structure de ce tronçon, y compris les parties supérieures incurvées des poutrelles circulaires transversales, des longerons, de la peau et de tous les raccords, est réalisée sur le plancher du hangar. Des câbles provenant du toit du hangar sont fixés en des endroits appropriés du tronçon achevé, qui est ensuite soulevé au moyen de treuils appropriés auxquels les câbles sont fixés. Le tronçon horizontal supérieur est élevé à une hauteur égale à l'épaisseur du tronçon à réaliser qui est situé en dessous. L'opération est répétée jusqu'à achèvement de la fabrication du dirigeable.

Même si la solution proposée par l'art antérieur est appréciable, elle n'est pas totalement satisfaisante. En effet, elle nécessite de disposer d'un hangar pourvu d'un rail s'étendant longitudinalement, par rapport au hangar, et dans le plan vertical longitudinal de l'aérostat lorsque celui-ci est terminé. Le monorail doit être équipé d'une pluralité de treuils et câbles partant de chaque treuil.

Aussi, l'installation de ces équipements sollicite la structure du bâtiment, ces équipements ne sont pas aisément déplaçables dans d'autres hangars, par exemple pour y être utilisés pour un autre aérostat. Par ailleurs, les pièces en cours d'assemblage ne sont pas maintenues mécaniquement.

### Exposé de l'invention

Un but de l'invention est notamment de remédier à tout ou partie des inconvénients précités.

Selon un premier aspect de l'invention, il est proposé un procédé pour ériger la structure d'un aérostat par tronçons horizontaux successifs, en partant du tronçon horizontal supérieur, comportant une itération des étapes suivantes, à partir d'un état courant de réalisation de la structure de l'aérostat,
- soulever l'état courant de la structure, au niveau de premiers points de levage, par des moyens de levage disposés en une position transversale courante,
- placer un dispositif de support au droit d'un deuxième point de levage de l'état courant de la structure,
- transférer l'état courant de la structure du moyen de levage sur le dispositif de support,
- déplacer les moyens de levage en une autre position transversale qui est la position courante du moyen de levage de l'état succédant à l'état courant,
- assembler entièrement le tronçon horizontal immédiatement inférieur à l'état courant de la structure sur la structure.

L'étape de transfert de l'état courant de la structure du moyen de levage sur le dispositif support peut être réalisée par abaissement de l'état courant de la structure par le moyen de levage et placement en état de repos de l'état courant de la structure sur le dispositif de support.

L'étape de soulever l'état courant de la structure peut être avantageusement réalisée par des vérins mais aussi par des treuils de levage disposés au-dessus de la structure en cours d'assemblage. Ces deux moyens peuvent être utilisés en combinaison. Les treuils de levage peuvent être avantageusement mis en œuvre à partir d'une phase de montage dite d'équateur correspond à la largeur maximale de la structure en cours d'assemblage.

Selon d'autres caractéristiques avantageuses et non limitatives de l'invention, prises seules ou selon toute combinaison techniquement réalisable :
- les moyens de levage comportent des vérins ;
- les premiers points de levage sont disposés au niveau des extrémités transversales de support de l'aérostat ;
- la structure est soulevée au niveau d'extrémités transversales de la structure.

Le procédé d'érection peut en outre comprendre les étapes suivantes : une étape pour disposer
- une structure de soute à l'intérieur de la structure en cours d'érection :
- la structure de soute est placée sur des tables de levage,
- l'étape itérative d'assemblage comprend une étape pour assembler la structure de soute de façon à la coupler mécaniquement au tronçon horizontal en cours d'assemblage au moyen de poutres,

Le procédé d'érection selon l'invention comprend en outre une pluralité d'étapes pour relier des points déterminés de la partie supérieure de la structure déjà assemblée à des points déterminés des poutres de couplage mécanique de la structure de soute à la structure,

Suivant encore un autre aspect de l'invention, il est proposé un système pour ériger la structure d'un aérostat par tronçons horizontaux successifs, en partant du tronçon horizontal supérieur, mettant en œuvre le procédé d'érection selon l'invention, comprenant :
- des moyens de levage disposés en une position transversale courante, prévus pour soulever l'état courant de la structure au niveau de premiers points de levage,
- des moyens pour placer un dispositif de support au droit de deuxièmes points de levage de l'état courant de la structure,
- des moyens pour transférer l'état courant de la structure du moyen de levage sur le dispositif de support, de façon à abaisser l'état courant de la structure par lesdits moyen de levage et faire reposer l'état courant de la structure sur le dispositif de support),
- des moyens pour déplacer les moyens de levage en une autre position transversale [qui est la position courante du moyen de levage de l'état succédant à l'état courant],
- des moyens pour assembler entièrement le tronçon horizontal immédiatement inférieur à l'état courant de la structure sur la structure.

Le système d'érection selon l'invention peut en outre avantageusement comprendre des moyens pour disposer une structure de soute à l'intérieur de la structure en cours d'érection.

Les moyens pour disposer la structure de soute peuvent comprendre des tables de levage sur lesquelles la structure de soute est placée.

Les moyens d'assemblage peuvent en outre être agencés pour assembler la structure de soute de façon à la coupler mécaniquement au tronçon horizontal en cours d'assemblage au moyen de poutres.

Le système d'érection selon l'invention peut alors comprendre des moyens pour relier des points déterminés de la partie supérieure de la structure déjà assemblée à des points déterminés des poutres de couplage mécanique de la structure de soute à la structure

Il est proposé de réaliser un aérostat porteur de charge lourde.

De préférence, l'aérostat présente une structure comportant un squelette rigide recouvert d'une enveloppe souple et contenant des ballons de gaz porteur. Le squelette est un assemblage de poutres agencées en cadres transversaux et lisses longitudinales et raidi par un système d'éléments tendus. Les ballons de gaz porteurs sont répartis dans la longueur de l'aérostat.

Lorsque cet aérostat comporte une soute prévue pour recevoir une charge, cette soute comporte une structure de soute couplée mécaniquement à la structure de l'aérostat, d'une part, par un ensemble de poutres disposées transversalement de part et d'autre de la structure de soute et reliées mécaniquement à des faces latérales de ladite structure, et d'autre part par un ensemble de câbles tendus entre des points déterminés desdites poutres de couplage et des points déterminés de la partie supérieure de ladite structure. Cet agencement étant réalisé pour les cadres "principaux" séparant les ballons de gaz porteur.

Les poutres transversales peuvent avantageusement comprendre des poutres treillis constituées de tubes composites en carbone pultrudés, et les câbles comprennent des joncs composites de section pleine en carbone pultrudé. L'aérostat comprend alors des connexions articulées des câbles aux poutres de couplage et à la partie supérieure de la structure. Ces connexions articulées peuvent comprendre des pièces métalliques.

Les poutres entre la structure de la soute et la structure principale permettent d'assurer la stabilité de la partie basse. Les câbles tendus entre ces poutres et la partie supérieure de la structure principale transmettent les efforts entre la soute supportant la charge utile et la partie supérieure supportant les efforts de portance issus de la pression aérostatique de l'hélium.

La structure dans son ensemble est autoporteuse. Elle a une résistance et une stabilité lui permettant de supporter son propre poids et celui des différents équipements sans la présence du gaz porteur. La capacité autoporteuse de la structure s'applique aussi aux états intermédiaires de son assemblage par tronçons horizontaux successifs. Cette capacité est rendue possible par un agencement de poutres rigides et d'éléments tendus sur le pourtour des cadres principaux séparant les ballons de gaz porteur.

### Description des figures

D'autres avantages et particularités de l'invention apparaîtront à la lecture de la description détaillée de mises en œuvre et de modes de réalisation nullement limitatifs, au regard de dessins annexés sur lesquels :

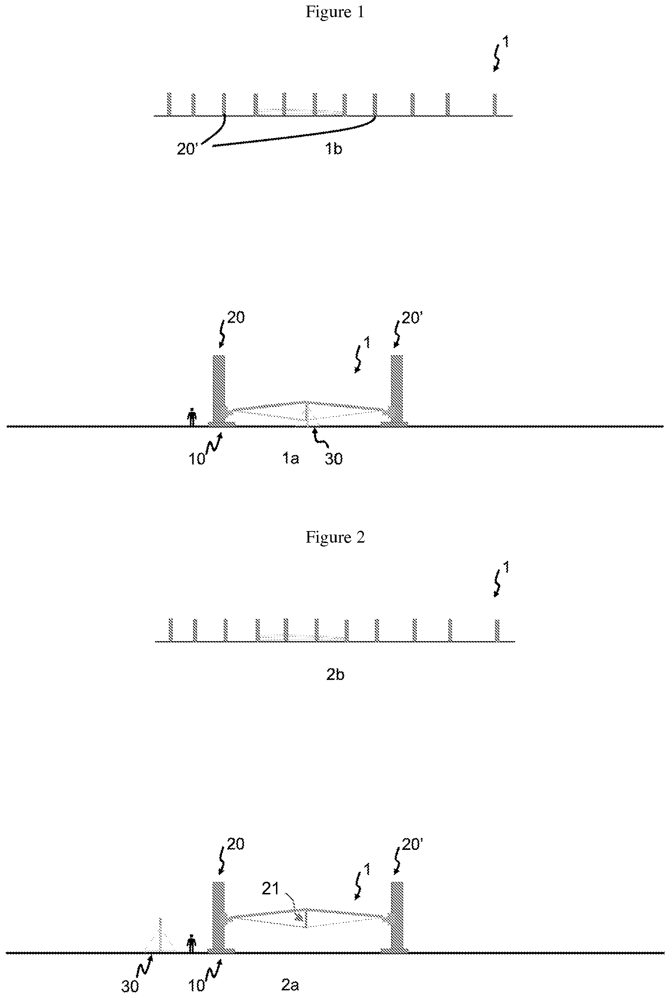

Les figures 1 à 10 illustrent une succession d'étape d'un procédé selon l'invention et d'un système

selon l'invention adapté pour la mise en œuvre du procédé selon l'invention.

### Description de modes de réalisation

Les modes de réalisation décrits ci-après n'étant nullement limitatifs, on pourra notamment considérer des variantes de l'invention ne comprenant qu'une sélection de caractéristiques décrites, par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Sur les figures un élément apparaissant sur plusieurs figures conserve la même référence.

En référence à la figure 1, il est décrit une étape initiale de construction d'un dirigeable 1 par tronçons horizontaux successifs, en partant du tronçon horizontal supérieur.

Chacune des figures 1 à 10 comporte une sous-figure a présentant une vue de face de l'état courant de construction du dirigeable 1 et une sous-figure b présentant une vue longitudinale, depuis le côté gauche, de l'état courant de construction du dirigeable 1.

On observe la présence d'un dispositif de fabrication 10 selon un mode de réalisation selon l'invention, comportant deux pluralités de colonnes de levage 20 et 20' s'élevant depuis une surface d'une zone d'assemblage.

Comme l'illustre plus particulièrement la figure 1b, la pluralité de colonne 20' est alignée sur un côté gauche du dirigeable tandis que la pluralité de la colonne 20 est alignée sur un côté droit du dirigeable.

À chaque colonne 20 correspond une colonne 20' dans un plan transversal du dirigeable en construction.

Chacune des colonnes de levage présente un chariot élévateur agencé pour être monté verticalement à coulissement sur la colonne de levage, selon un déplacement de 10 mètres, et pour être commandé par une poignée de commande sous forme de timon renforcé ou d'une pédale.

Au centre de ces deux colonnes est disposé un trépied 30.

Comme cela est plus particulièrement visible sur la figure 1a, différents câbles et longerons pour fixer des parties de connexion sont mis en place. Les panneaux d'enveloppe sont également installés, ainsi que les réseaux de communication et le positionnement de la cellule d' hélium.

Comme cela est mieux visible sur la figure 1b, cette installation est réalisée non seulement sur une partie transversale du tronçon supérieur, mais également tout le long de l'extension longitudinale du tronçon supérieur.

Aussi, la totalité de la structure de ce tronçon, y compris les parties supérieures incurvées des poutrelles circulaires transversales, des longerons, de la peau et de tous les raccords, est réalisée sur le plancher du hangar.

Comme cela est visible sur la figure 1a, le poids du dirigeable est réparti latéralement sur les colonnes de levage 20 et 20' et sur le trépied 30 au centre.

En référence à la figure 2, il est décrit une étape qui succède à l'étape décrite en référence à la figure 1. Comme cela est représenté plus particulièrement sur la figure2a, le dirigeable est soulevé d'une hauteur appropriée à la construction du tronçon horizontal suivant.

Dans cet état, le poids du dirigeable est réparti latéralement sur les colonnes de levage 20 et 20' en deux points d'appui, et libérant le trépied 30 qui peut être déplacé.

Ceci est rendu possible par la stabilité structurelle verticale du tronçon raidi par un système de contreventement par câbles 21 au niveau des cadres principaux séparant les ballons d'hélium.

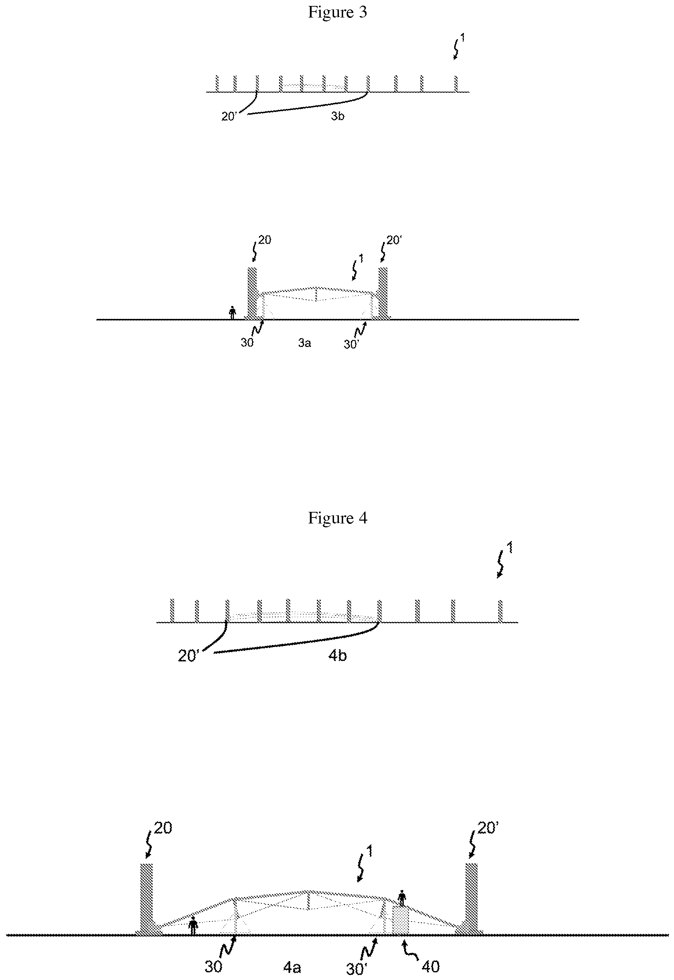

En référence à la figure 3, il est décrit une étape qui succède à l'étape décrite en référence à la figure 2. Comme cela est représenté plus particulièrement sur la figure 3a, le dispositif de fabrication 10 comporte un trépied 30' supplémentaire.

Les trépieds 30 et 30' sont placés au droit de deux points de reprise de charge du dirigeable 1 convenablement disposés à proximité des extrémités supportées par les deux colonnes 20 et 20'.

Par suite, le dirigeable est posé sur les trépieds sur chacun de ses deux points de reprise de charge.

Dans cet état, le poids du dirigeable est réparti latéralement sur les deux trépieds 30 et 30', libérant les colonnes de levage 20 et 20'.

En référence à la figure 4, il est décrit une étape qui succède à l'étape décrite en référence à la figure 3.

Comme cela est représenté plus particulièrement sur la figure 4a, les colonnes de levage 20 et 20' sont chacune déplacées dans une deuxième position transversale.

Comme cela est plus particulièrement visible sur la figure 4a, différents câbles et longerons pour fixer des parties de connexion sont mis en place. Les panneaux d'enveloppe sont également installés, ainsi que les réseaux de communication et le positionnement de la cellule d' hélium.

Comme cela est mieux visible sur la figure 4b, cette installation est réalisée non seulement sur une partie transversale du tronçon courant, mais également tout le long de l'étendue longitudinale du tronçon courant.

Aussi, la totalité de la structure de ce tronçon, y compris les parties supérieures incurvées des poutrelles circulaires transversales, des longerons, de la peau et de tous les raccords, est réalisée sur le plancher du hangar.

On observe que la présence d'un opérateur sur une plateforme de travail 40, élevée à 3 mètres de hauteur, est nécessaire pour réaliser certaines opérations. Comme cela est visible sur la figure 4a, le poids du dirigeable est réparti latéralement sur les colonnes de levage 20 et 20' et sur chacun des trépieds 30 et 30' au niveau des points de reprise de charge.

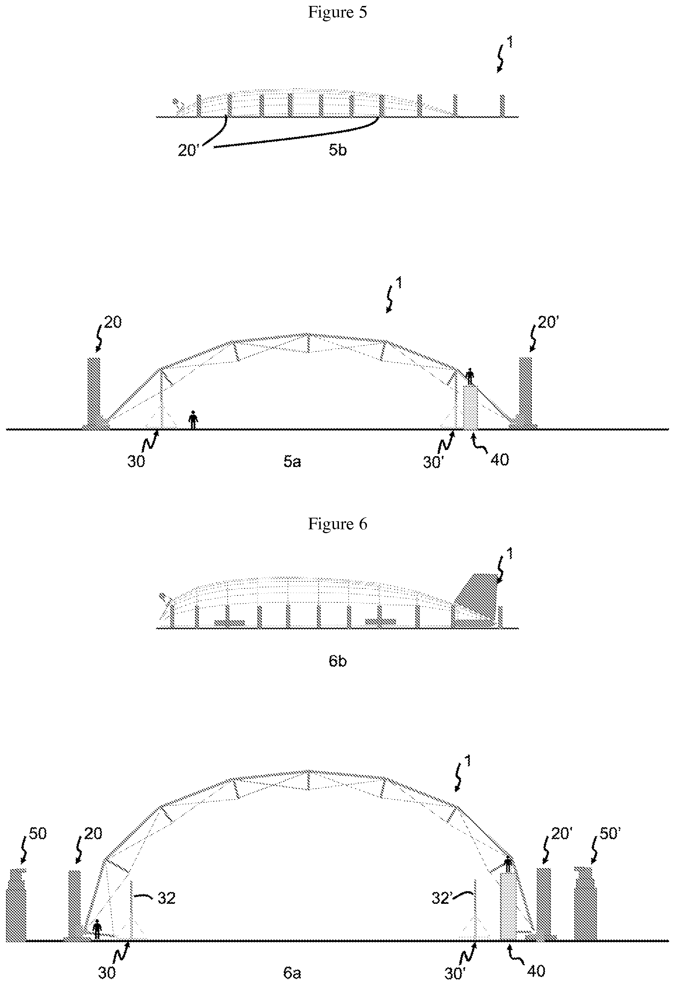

En référence à la figure 5, il est décrit une étape qui succède à l'étape décrite en référence à la figure 4. Pour pouvoir passer de l'état courant de construction du dirigeable en figure 4 à l'état courant de construction du dirigeable en figure 5, les étapes suivantes ont été réalisées :
- soulever le dirigeable 1 de sorte à libérer chacun des deux trépieds 30 et 30', le poids du dirigeable étant alors uniquement repris au niveau des colonnes 20 et 20', comme pour l'étape décrite en référence à la figure 2,
- déplacer les trépieds 30 et 30' au droit de deux deuxièmes points de reprise de charge convenablement disposés à proximité des extrémités supportées par les deux colonnes 20 et 20', et poser le dirigeable sur les trépieds sur chacun de deux deuxièmes points de reprise de charge, le poids du dirigeable étant alors uniquement repris au niveau des trépieds 30 et 30', comme pour l'étape décrite en référence à la figure 3, et
- déplacer chacune des colonnes de levage 20 et 20' dans une troisième position transversale, installer différents câbles et longerons pour fixer des parties de connexion, ainsi que les panneaux d'enveloppe, les réseaux de communication et le positionnement de la cellule d' hélium, le poids du dirigeable étant réparti latéralement sur les colonnes de levage 20 et 20' et sur chacun des trépieds 30 et 30' au niveau des deuxièmes points de reprise de charge, comme décrit en référence à la figure 4. Comme cela est mieux visible sur la figure 5b, cette installation est réalisée non seulement sur une partie transversale du tronçon courant, mais également tout le long de l'étendue longitudinale du tronçon courant.

On observe que la présence d'un opérateur sur la plateforme de travail 40, élevée à 6 mètres de hauteur, qui est elle-même déplacée latéralement, est nécessaire pour réaliser certaines opérations.

En référence à la figure 6, il est décrit une étape qui succède à l'étape décrite en référence à la figure 5. La figure 6 comporte une sous-figure 6a présentant une vue de face de l'état courant de construction du dirigeable 1 et une sous-figure 6b présentant une vue longitudinale de l'état courant de construction du dirigeable 1.

Pour pouvoir passer de l'état courant de construction du dirigeable en figure 5 à l'état courant de construction du dirigeable en figure 6, les étapes décrites en référence au passage de l'état de la figure 4 à la figure 5 ont été réalisées.

On observe que la présence d'un opérateur sur la plateforme de travail 40, maintenant élevée à une dizaine de mètres de hauteur, qui est elle-même déplacée latéralement, est nécessaire pour réaliser certaines opérations.

En outre, cette étape comporte l'installation de moteurs de propulsion ainsi que l'installation de la queue du dirigeable 1.

Comme cela est représenté plus particulièrement sur la figure 6a, le dispositif de fabrication 10 comporte des colonnes de levages 50 et 50' supplémentaires.

Chacune des colonnes de levage supplémentaires présente un chariot élévateur agencé pour être monté verticalement à coulissement sur la colonne de levage, selon un déplacement de 25 mètres, et pour être commandé par une poignée de commande sous forme de timon renforcé ou d'une pédale.

En outre, chacun des deux trépieds 30 et 30' est pourvu en son extrémité supérieure d'un bras vertical, ou mèche, ou tige verticale, respectivement 32 et 32'.

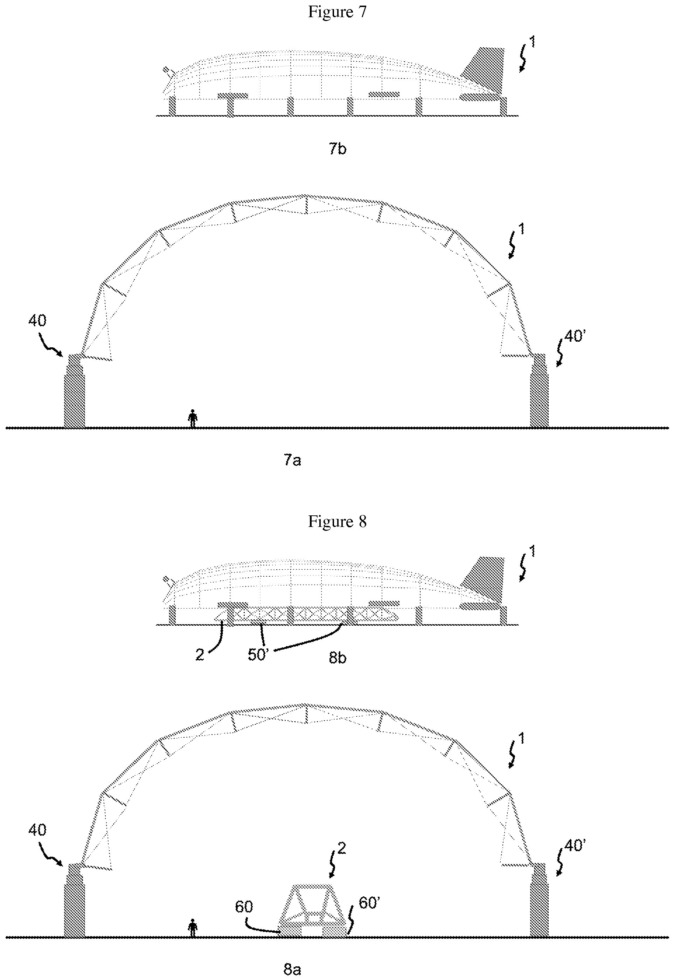

En référence à la figure 7, il est décrit une étape qui succède à l'étape décrite en référence à la figure 6.

Pour pouvoir passer de l'état courant de construction du dirigeable en figure 5 à l'état courant de construction du dirigeable en figure 6, les étapes décrites les étapes suivantes ont été réalisées :
- levage du dirigeable sur toute la hauteur des colonnes 20 et 20', de sorte que le poids du dirigeable n'est repris que par les colonnes 20 et 20',
- déplacer les trépieds 30 et 30' au droit d'autres points de reprise de charge convenablement disposés à proximité des extrémités supportées par les deux colonnes 20 et 20', et poser le dirigeable sur les tiges verticales des trépieds sur chacun des deux autres points de reprise de charge, le poids du dirigeable étant alors uniquement repris au niveau des trépieds 30 et 30' ,
- retrait des colonnes 20 et 20',
- reprise des autres points de reprise de charge par les colonnes de lavages supplémentaires 50 et 50', et
- retrait des trépieds 30 et 30' et de la plateforme de travail 40.

En référence à la figure 8, il est décrit une étape qui succède à l'étape décrite en référence à la figure 7. À l'étape 8, la soute 2 du dirigeable 1 est déplacée sous la structure jusqu'alors érigée.

Le dispositif de fabrication 10 comporte des tables de levage 60 et 60' sur lesquelles repose la soute 2.

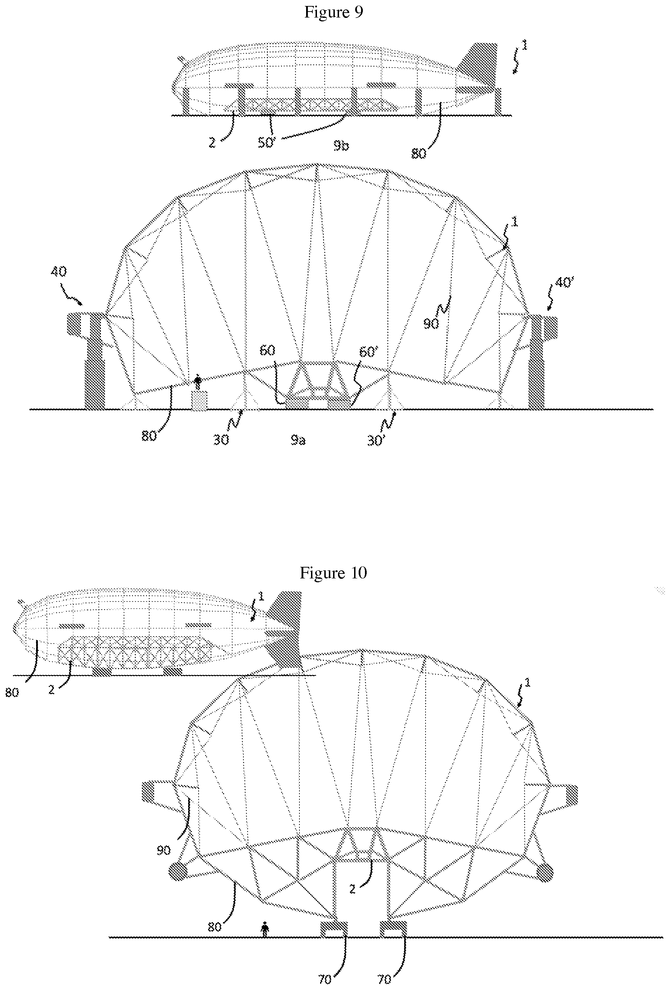

En référence à la figure 9, il est décrit une étape qui succède à l'étape décrite en référence à la figure 8.

Les colonnes de levages supplémentaires 50 et 50' soulèvent le dirigeable 1 de sorte que le tronçon le plus supérieur de la partie inférieure de la structure du dirigeable 1 puisse être fixé sur la structure déjà érigée ainsi que sur la soute 2. À cet effet, chacun des deux trépieds 30 et 30' est à nouveau placé avec son bras sous des points en élévation par rapport au sol, sur lesquels des extrémités de poutres doivent être fixées.

Par ailleurs, deux nouveaux trépieds 30' et 30" sont placés également sous de tels points en élévation par rapport au sol.

Comme cela est plus particulièrement visible sur la figure 9a, différents câbles et longerons pour fixer des parties de connexion sont mis en place sur le tronçon le plus supérieur de la partie inférieure. L'installation des câbles de liaisonnement 90 est notamment facilitée par l'absence du gaz porteur ce qui limite l'introduction de prétension. Les panneaux d'enveloppe sont également installés, ainsi que les réseaux de communication et le positionnement de la cellule d'hélium.

En référence à la figure 10, il est décrit une étape qui succède à l'étape décrite en référence à la figure 9. La structure du dirigeable 1 est complètement terminée et la soute 2 du dirigeable est fixée à la structure du dirigeable. La structure du dirigeable comporte plusieurs poutres transversales 80, ainsi que les câbles de liaisonnement.

Par ailleurs, le dirigeable 1 est placé sur un dispositif de transport 70, du type plateforme de transport présentant une pluralité de roues. Il est alors possible de réaliser des tests statiques sur le terminal, mais aussi de tester le fonctionnement de treuils, spécifiques au dirigeable, qui peuvent être embarqués dans la soute pour ses opérations, et qui doivent donc être testés.

On va maintenant décrire un autre mode d'implémentation du procédé selon l'invention, dans lequel des treuils de levage sont aussi mis en œuvre en combinaison avec les colonnes de levage précitées, à partir d'une phase de montage dite d'équateur.

Dans cette phase d'équateur, la partie supérieure du dirigeable a déjà été assemblée jusqu'à atteindre la partie la plus large (l'équateur) de la structure tridimensionnelle.

A ce stade, de petites colonnes assurent le positionnement géométrique, le lever et la descente de la charge, tandis que de grandes colonnes assurent une prise en charge du positionnement géométrique effectué par les petites colonne, un support de la charge en X, Y, Z et contribuent aussi au lever et à la descente de la charge.

Des treuils de levage (non représentés) sont disposés à l'intérieur de l'unité d'assemblage sur une ou plusieurs structure mécaniques surplombant le dirigeable en cours d'assemblage. Ces treuils sont fixés à des petites colonnes.

Dans une phase suivante d'assemblage au-dessus de l'équateur, les petites colonnes assurent le positionnement géométrique, le support de la charge en X, Y, Z, et le lever et descente de la charge, tandis que les treuils assurent une prise en charge du positionnement géométrique effectué par les petites colonnes, le support de la charge en Z au-dessus de l'équateur, et contribuent au lever et à la descente de la charge.

Dans une phase suivante d'achèvement de l'assemblage, les petites colonnes assurent le positionnement géométrique, le support de la charge en X, Y, Z, le lever et la descente de la charge, tandis que les treuils assurent la prise en charge du positionnement géométrique effectué par les petites colonnes, le support de la charge en Z au-dessus de l'équateur, et contribuent au lever et à la descente de la charge.

Bien sûr, l'invention n'est pas limitée aux exemples qui viennent d'être décrits et de nombreux aménagements peuvent être apportés à ces exemples sans sortir du cadre de 1 invention défini par les revendications suivantes. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Procédé pour ériger la structure d'un aérostat (1) par tronçons horizontaux successifs, en partant du tronçon horizontal supérieur, comportant une itération des étapes suivantes, à partir d'un état courant de réalisation de la structure de l'aérostat,
- soulever l'état courant de la structure, au niveau de premiers points de levage, par des moyens de levage (20, 20', 50, 50') disposés en une position transversale courante,
- placer un dispositif de support (30, 30') au droit de deuxième points de levage de l'état courant de la structure,
- transférer l'état courant de la structure du moyen de levage sur le dispositif de support,
- déplacer les moyens de levage en une autre position transversale,
- assembler entièrement le tronçon horizontal immédiatement inférieur à l'état courant de la structure sur la structure.

2. Procédé selon la revendication 1, **caractérisé en ce que** l'étape de transfert comprend un abaissement de l'état courant de la structure par le moyen de levage et un placement au repos de l'état courant de la structure sur le dispositif de support,

3. Procédé selon l'une des revendications 1 ou 2, dans lequel la structure érigée est autoporteuse à chaque état intermédiaire courant du procédé.

4. Procédé selon l'une quelconque des revendications précédentes, dans lequel l'étape de soulever l'état courant de la structure met en œuvre des vérins.

5. Procédé selon l'une quelconque des revendications précédentes, dans lequel l'étape de soulever l'état courant de la structure met en œuvre des treuils de levage disposés au-dessus de ladite structure.

6. Procédé selon la revendication 5, **caractérisé en ce que** les treuils de levage sont mis en œuvre à partir d'une phase d'assemblage dite d'équateur dans laquelle la structure en cours d'érection atteint sa largeur maximale.

7. Procédé selon l'une quelconque des revendications précédentes, dans lequel les premiers points de levage sont disposés au niveau des extrémités transversales de support de l'aérostat.

8. Procédé selon l'une quelconque des revendications précédentes, dans lequel la structure est soulevée au niveau d'extrémités transversales de la structure.

9. Procédé selon l'une quelconque des revendications précédentes, comprenant en outre une étape pour disposer une structure de soute (2) à l'intérieur de la structure en cours d'érection.

10. Procédé selon la revendication précédente, dans lequel la structure de soute (2) est placée sur des tables de levage (60,60').

11. Procédé selon l'une des revendications 9 ou 10, dans lequel l'étape itérative d'assemblage comprend une étape pour assembler la structure de soute (2) de façon à la coupler mécaniquement au tronçon horizontal en cours d'assemblage au moyen de poutres.

12. Procédé selon la revendication précédente, **caractérisé en ce qu'**il comprend en outre une pluralité d'étapes pour relier des points déterminés de la partie supérieure de la structure déjà assemblée à des points déterminés des poutres de couplage mécanique de la structure de soute à la structure.

13. Système pour ériger la structure d'un aérostat (1) par tronçons horizontaux successifs, en partant du tronçon horizontal supérieur, mettant en œuvre le procédé d'érection selon l'une des revendications précédentes, comprenant :
- des moyens de levage (20, 20', 50, 50') disposés en une position transversale courante, prévus pour soulever l'état courant de la structure au niveau de premiers points de levage
- des moyens pour placer un dispositif de support (30, 30') au droit de deuxièmes points de levage de l'état courant de la structure,
- des moyens pour transférer l'état courant de la structure du moyen de levage sur le dispositif de support, de façon à abaisser l'état courant de la structure par lesdits moyen de levage et faire reposer l'état courant de la structure sur le dispositif de support,
- des moyens pour déplacer les moyens de levage en une autre position transversale qui est la position courante du moyen de levage de l'état succédant à l'état courant,
- des moyens pour assembler entièrement le tronçon horizontal immédiatement inférieur à l'état courant de la structure sur la structure.

14. Système selon la revendication précédente, comprenant en outre des moyens pour disposer une structure de soute à l'intérieur de la structure en cours d'érection.

15. Système selon la revendication précédente, dans lequel les moyens pour disposer la structure de soute comprennent des tables de levage sur lesquelles la structure de soute est placée.

16. Système selon l'une des revendications **14** ou 15, dans lequel les moyens d'assemblage sont en outre agencés pour assembler la structure de soute de façon à la coupler mécaniquement au tronçon horizontal en cours d'assemblage au moyen de poutres.

17. Système selon la revendication précédente, comprenant en outre des moyens pour relier des points déterminés de la partie supérieure de la structure déjà assemblée à des points déterminés des poutres de couplage mécanique de la structure de soute à la structure.

18. Système selon l'une quelconque des revendications 13 à 17, **caractérisé en ce que** les moyens de levage comprennent des vérins.

19. Système selon l'une quelconque des revendications 13 à 18, **caractérisé en ce que** les moyens de levage comprennent des treuils disposés au-dessus de la structure en cours d'érection.

## Patentansprüche

1. Verfahren zum Errichten der Struktur eines Luftfahrzeugs (1) durch aufeinanderfolgende horizontale Teilstücke, beginnend mit dem oberen horizontalen Teilstück, das eine Iteration der folgenden Schritte, ab einem aktuellen Bewerkstelligungsstand der Struktur des Luftfahrzeugs, vorweist,
- Anheben des aktuellen Stands der Struktur an ersten Hebepunkten durch Hebemittel (20, 20', 50, 50'), die in einer aktuellen Querposition angeordnet sind,
- Anbringen einer Trägervorrichtung (30, 30') direkt unter zweiten Hebepunkten des aktuellen Stands der Struktur,
- Verlagern des aktuellen Stands der Struktur von dem Hebemittel auf die Trägervorrichtung,
- Versetzen der Hebemittel in eine andere Querposition,
- vollständiges Zusammenbauen des horizontalen Teilstücks unmittelbar unterhalb des aktuellen Stands der Struktur an der Struktur.

2. Verfahren nach Anspruch 1, **dadurch gekennzeichnet, dass** der Verlagerungsschritt ein Herablassen des aktuellen Stands der Struktur durch das Hebemittel und eine Anbringung des aktuellen Stands der Struktur in den Ruhezustand auf der Trägervorrichtung umfasst,

3. Verfahren nach einem der Ansprüche 1 oder 2, wobei die errichtete Struktur in jedem aktuellen Zwischenstand des Verfahrens selbsttragend ist.

4. Verfahren nach einem der vorstehenden Ansprüche, wobei bei dem Anhebeschritt des aktuellen Stands der Struktur Heber eingesetzt werden.

5. Verfahren nach einem der vorstehenden Ansprüche, wobei bei dem Anhebeschritt des aktuellen Stands der Struktur Hubwinden eingesetzt werden, die über der Struktur angeordnet sind.

6. Verfahren nach Anspruch 5, **dadurch gekennzeichnet, dass** die Hubwinden ab einer Zusammenbauphase, genannt die Äquatorphase, eingesetzt werden, in der die in der Errichtung befindliche Struktur ihre maximale Breite erreicht.

7. Verfahren nach einem der vorstehenden Ansprüche, wobei die ersten Hebepunkte an den Querträgerenden des Luftfahrzeugs angeordnet sind.

8. Verfahren nach einem der vorstehenden Ansprüche, wobei die Struktur an Querenden der Struktur angehoben wird.

9. Verfahren nach einem der vorstehenden Ansprüche, ferner umfassend einen Schritt zum Anordnen einer Frachtraumstruktur (2) im Inneren der in der Errichtung befindlichen Struktur.

10. Verfahren nach dem vorstehenden Anspruch, wobei die Frachtraumstruktur (2) auf Hubtischen (60,60') angebracht wird.

11. Verfahren nach einem der Ansprüche 9 oder 10, wobei der iterative Zusammenbauschritt einen Schritt zum Zusammenbauen der Frachtraumstruktur (2), um sie mit dem im Zusammenbau befindlichen horizontalen Teilstück mittels Stützen mechanisch zu koppeln, umfasst.

12. Verfahren nach dem vorstehenden Anspruch,
**dadurch gekennzeichnet, dass** es ferner eine Vielzahl von Schritten zum Verbinden bestimmter Punkte des oberen Teils der bereits zusammengebauten Struktur mit bestimmten Punkten der Stützen für eine mechanische Kopplung der Frachtraumstruktur mit der Struktur umfasst.

13. System zum Errichten der Struktur eines Luftfahrzeugs (1) durch aufeinanderfolgende horizontale Teilstücke, beginnend mit dem oberen horizontalen Teilstück, wobei das Errichtungsverfahren nach einem der vorstehenden Ansprüche eingesetzt wird, umfassend:
- Hebemittel (20, 20', 50, 50'), die in einer aktuellen Querposition angeordnet sind und zum Anheben des aktuellen Stands der Struktur an ersten Hebepunkten vorgesehen sind
- Mittel zum Anbringen einer Trägervorrichtung (30, 30') direkt unter zweiten Hebepunkten des aktuellen Stands der Struktur,
- Mittel zum Verlagern des aktuellen Stands der Struktur von dem Hebemittel auf die Trägervorrichtung, um den aktuellen Stand der Struktur durch die Hebemittel herabzulassen und den aktuellen Stand der Struktur auf der Trägervorrichtung ruhen zu lassen,
- Mittel zum Versetzen der Hebemittel in eine andere Querposition, die die aktuelle Position des Hebemittels des auf den aktuellen Stand nachfolgenden Stands ist,
- Mittel zum vollständigen Zusammenbauen des horizontalen Teilstücks unmittelbar unterhalb des aktuellen Stands der Struktur an der Struktur.

14. System nach dem vorstehenden Anspruch, ferner umfassend Mittel zum Anordnen einer Frachtraumstruktur im Inneren der in der Errichtung befindlichen Struktur.

15. System nach dem vorstehenden Anspruch, bei dem die Mittel zum Anordnen der Frachtraumstruktur Hubtische, auf denen die Frachtraumstruktur angebracht wird, umfassen.

16. System nach einem der Ansprüche 14 oder 15, wobei die Zusammenbaumittel ferner zum Zusammenbauen der Frachtraumstruktur, um sie mit dem im Zusammenbau befindlichen horizontalen Teilstück mittels Stützen mechanisch zu koppeln, eingerichtet sind.

17. System nach dem vorstehenden Anspruch, ferner umfassend Mittel zum Verbinden bestimmter Punkte des oberen Teils der bereits zusammengebauten Struktur mit bestimmten Punkten der Stützen für die mechanische Kopplung der Frachtraumstruktur mit der Struktur.

18. System nach einem der Ansprüche 13 bis 17,
**dadurch gekennzeichnet, dass** die Hebemittel Heber umfassen.

19. System nach einem der Ansprüche 13 bis 18,
**dadurch gekennzeichnet, dass** die Hebemittel Winden, die über der in der Errichtung befindlichen Struktur angeordnet sind, umfassen.

## Claims

1. A method for erecting the structure of an aerostat (1) by successive horizontal sections, starting with the upper horizontal section, comprising an iteration of the following steps, starting with a current state of manufacturing of the structure of the aerostat,
- lifting the current state of the structure, at first lifting points, by lifting means (20, 20', 50, 50') arranged in a current transverse position,
- placing a support device (30, 30') in line with second lifting points of the current state of the structure,
- transferring the current state of the structure from the lifting means to the support device,
- moving the lifting means to another transverse position,
- fully assembling the horizontal section immediately below the current state of the structure on the structure.

2. The method according to claim 1, **characterized in that** the transfer step comprises a lowering of the current state of the structure by the lifting means and placing the current state of the structure at rest on the support device,

3. The method according to one of claims 1 or 2, wherein the erected structure is self-supporting at each current intermediate state of the method.

4. The method according to any one of the preceding claims, wherein the step of lifting the current state of the structure uses jacks.

5. The method according to any one of the preceding claims, wherein the step of lifting the current state of the structure uses lifting winches arranged above said structure.

6. The method according to claim 5, **characterized in that** the lifting winches are implemented in a so-called equator assembly phase in which the structure being erected reaches its maximum width.

7. The method according to any one of the preceding claims, wherein the first lifting points are arranged at the transverse support ends of the aerostat.

8. The method according to any one of the preceding claims, wherein the structure is lifted at the transverse ends of the structure.

9. The method according to any one of the preceding claims, further comprising a step of arranging a cargo hold structure (2) inside the structure being erected.

10. The method according to the preceding claim, wherein the cargo hold structure (2) is placed on lifting tables (60,60').

11. The method according to one of claims 9 or 10, wherein the iterative assembly step comprises a step of assembling the cargo hold structure (2) so as to mechanically couple it to the horizontal section being assembled by means of beams.

12. The method according to the preceding claim, **characterized in that** it also comprises a plurality of steps for connecting determined points of the upper part of the structure already assembled to determined points of the beams for mechanically coupling the cargo hold structure to the structure.

13. A system for erecting the structure of an aerostat (1) by successive horizontal sections, starting with the upper horizontal section, implementing the erecting method according to one of the preceding claims, comprising:
- lifting means (20, 20', 50, 50') arranged in a current transverse position, intended to lift the current state of the structure at first lifting points,
- means for placing a support device (30,30') in line with second lifting points of the current state of the structure,
- means for transferring the current state of the structure by the lifting means onto the support device, so as to lower the current state of the structure by said lifting means and to rest the current state of the structure on the support device,
- means for moving the lifting means to another transverse position which is the current position of the lifting means of the state following the current state,
- means for fully assembling the horizontal section immediately below the current state of the structure on the structure.

14. The system according to the preceding claim, further comprising means for arranging a cargo hold structure inside the structure being erected.

15. The system according to the preceding claim, wherein the means for arranging the cargo hold structure comprise lifting tables on which the cargo hold structure is placed.

16. The system according to one of claims 14 or 15, wherein the assembly means are further arranged to assemble the cargo hold structure so as to mechanically couple it to the horizontal section being assembled by means of beams.

17. The system according to the preceding claim, further comprising means for connecting determined points of the upper part of the structure already assembled to determined points of the beams for mechanically coupling the cargo hold structure to the structure.

18. The system according to any one of claims 13 to 17,
**characterized in that** the lifting means comprise jacks.

19. The system according to any one of claims 13 to 18,
**characterized in that** the lifting means comprise winches arranged above the structure being erected.
